**Europäisches Patentamt**

**European Patent Office**

**Office européen des brevets**

(19)

(11) Veröffentlichungsnummer : **0 468 493 A1**

(12) **EUROPÄISCHE PATENTANMELDUNG**

(21) Anmeldenummer : **91112465.9**

(22) Anmeldetag : **25.07.91**

(51) Int. Cl.⁵ : **F16D 31/02**

(30) Priorität : **25.07.90 IT 4166690**

(43) Veröffentlichungstag der Anmeldung :
**29.01.92 Patentblatt 92/05**

(84) Benannte Vertragsstaaten :
**DE ES FR GB SE**

(71) Anmelder : **GREGGIO S.p.A.**
**5 Via Tagliamento**
**I-35030 Tencarola di Selvazzano (Padova) (IT)**

(72) Erfinder : **Greggio, Rino**
**9, via Firenze**
**I-35030 Tencarola di Selvazzano, Padova (IT)**
Erfinder : **Ferro, Luciano**
**53 via Bajard**
**I-35100 Padova (IT)**

(74) Vertreter : **Gustorf, Gerhard, Dipl.-Ing.**
**Patentanwalt Dipl.-Ing. Gerhard Gustorf**
**Bachstrasse 6 A**
**W-8300 Landshut (DE)**

(54) **Hydrostatische Drehbewegungsübertragungseinrichtung.**

㉗ Es handelt sich um ein neues System für die Änderung und die Übertragung der Umdrehungsbewegung, das ohne Rädergetriebe und mit dem mindest Wirkungsgradverlust arbeitet.

Die Umdrehung der Antriebswelle (I) verursacht mit Hilfe eines Nockens (L) die Translation eines Kolbens (H) ; sobald sich der Druck der Flussigkeit in der Kammer (N) erhöht, bleibt der Kolben (H) blockiert, so daß er zur Rotation gezwungen wird und dabei den Deckel (E) und die Vorgelegewelle (A) mitnimmt.

EP 0 468 493 A1

Die gewöhnlich angewendeten Technologien für die Änderung der Umdrehungsbewegung einer Leistungsabgabe nutzen die Reibung als Hauptfaktor des Verfahrens aus. Normalerweise, besonders in Fahrzeugen, werden Servogeräte wie Untersetzungs- oder Wechselgetriebe, Kupplungen usw. angewendet, um die Umdrehungsbewegung zu ändern, die z. B. von Elektro- oder Explosionsmotoren erzeugt wird.

Ein Nachteil solcher mit Zahnrädern, Riemen und Scheiben ausgestatteter Systeme besteht darin, verschiedene rotierende Elemente zu haben, die während des Ablaufes des Systems eine starke Reibung erzeugen: der Wirkungsgrad am Verbraucher, der daraus entsteht, ist demzufolge wesentlich niedriger als derjenige an der Leistungsabgabe.

Das obengenannte öldynamische System ermöglicht die Übertragung des Antriebsdrehmoments von der Antriebswelle zur Vorgelegewelle mit dem mindest Wirkungsgradverlust. Das System besteht hauptsächlich aus einer Antriebswelle, deren Ende mit einem Mechanismus versehen ist, der bei der Rotation der Antriebswelle die Translation eines Kolbens verursacht.

Während der Ansaugsphase saugt der Kolben Öl aus einem Behälter zur Kammer durch ein Rückschlagventil. Während der Verdichtungsphase verdichtet der Kolben das Öl bis es den ausreichenden Druck erreicht, um durch ein zweites Rückschlagventil in eine Hochdruckkammer hineinzufließen. Sobald der Druck in der Verdichtungskammer den Druck in der Hochdruckkammer erreicht, bleibt der Kolben blockiert, da er kein Öl mehr in die Hochdruckkammer zufließen lassen kann.

Wegen des Drucks innerhalb der Kammer kann der Kolben demzufolge seinen Hub nicht mehr ausführen, so daß er den exzentrischen Kopf der Antriebswelle blockiert.

Daraus folgt, daß sich der Kolben fest um die Antriebswelle dreht und dabei den hinteren Deckel mitnimmt, mit dem die Vorgelegewelle verbunden ist.

Die Drehzahl der Vorgelegewelle ist dadurch dieselbe der Antriebswelle und der einzige Wirkungsgradverlust hängt von den Lagern der Antriebswelle ab.

Die Verbindung zwischen Hochdruck- und Niederdruckkammer besteht aus Ventilen mit veränderlichem Schnitt, die von außen in Betrieb gesetzt werden, durch manuelle oder automatische Vorrichtungen.

Durch Öffnen des Ventils läuft das Fluid aus der Hochdruckkammer zum Behälter zurück. Da sich der Druck in der Hochdruckkammer erniedrigt hat, beginnt der Kolben seinen Hub zum Teil von neuem, so daß die Drehzahl des hinteren Deckels niedriger als diejenige der Antriebswelle wird.

Die Ventilöffnung kann größer oder kleiner werden, so daß man den Abfluß des Fluids regeln kann.

Der Niederdrucköbehälter ist mit einer Vorrichtung versehen für den Ausgleich der Volumenänderung des Öls; solche Änderung wird sowohl vom Temperaturanstieg während des Ablaufes des Systems, als auch vom Ablauf des Öls aus der Hochdruckkammer verursacht.

Als unbegrenztes Beispiel wird ein praktisches Verwirklichungsmodell der Erfindung beschrieben.

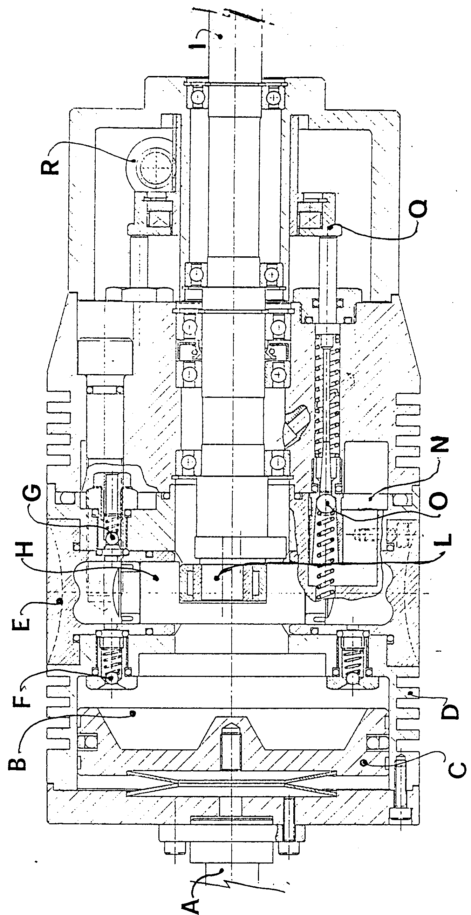

Die Abbildung zeigt das öldynamische System für die Übertragung der Umdrehungsbewegung.

Man zeigt mit (I) die Antriebswelle, die durch den Nocken (L) die Translation des doppelwirkenden Kolbens (H) verursacht; während des Ansaugshubs (OT. UT.) saugt der doppelwirkende Kolben (H) das Öl durch die Rückschlagventile (F) aus dem Behälter (B).

Während des Verdichtungshubs (UT. OT.) verdichtet der Kolben das Öl; sobald ein gewisser Druck erreicht wird, öffnen sich zwei Rückschlagventile (G), die das Öl in eine Hochdruckkammer (N) zufließen lassen.Sobald der Druck des Öls in der Hochdruckkammer (N) den Verdichtungsdruck des Öls in der Kammer des Kolbens (H) überschreitet, kann das vom Kolben (H) verdichtete Öl nicht mehr in die Hochdruckkammer (N) zufließen.

Da das verdichtete Öl nicht mehr ablaufen kann, blockiert sich der Hub des Kolbens (H), der seinerseits den exzentrischen Kopf der Antriebswelle (I) blockiert; die Antriebswelle nimmt den Kolben bei der Umdrehungsbewegung mit; da die Kammer (E) des Kolbens (H) mit dem Rest des Systems verbunden ist, werden bei der Umdrehungsbewegung auch der Deckel und die Vorgelegewelle (A) mitgenommen.

Die Hochdruckkammer (N) ist durch zwei kegelförmige Rückschlagventile (O) mit der Niederdruckkammer (B) verbunden; diese Ventile werden von außen durch eine manuelle oder automatische Vorrichtung (R) in Betrieb gesetzt, die mit einem frontalen Drucklager (Q) verbunden ist. Wenn man von außen die Rückschlagventile (O) in Betrieb setzt, läuft das in der Hochdruckkammer (N) enthaltene verdichtete Öl in die Niederdruckkammer (B) ein; da die Ventile kegelförmig sind, je weiter sie geöffnet werden, desto mehr Öl läuft aus; da dadurch der Druck in der Hochdruckkammer (N) niedriger geworden ist, beginnt der doppelwirkende Kolben (H) seinen Hub zum Teil von neuem. Dadurch ist die Drehzahl des Deckels kleiner als diejenige der Antriebswelle (I).

Um Vibrationen zu vermeiden ist die Antriebswelle mit einem zweiten Nocken (S) versehen.

Die Niederdruckkammer (B) ist mit Außenkühlrippen (D) ausgestattet und mit einer Vorrichtung (C) versehen für den Ausgleich der Volumenänderungen des Öls; diese Änderungen werden sowohl von der Temperaturerhöhung, als auch vom Ablauf des Öls durch Öffnen der Rückschlagventile verursacht.

Diese schematisch aufgezeichneten Bedingungen sind für einen Sachverständigen ausreichend, um die

3

Erfindung zu verwirklichen. Konkrete Anwendung kann Veränderungen zur Folge haben, ohne Vorurteile für das neue Grundkonzept zu haben.

## Patentansprüche

1) Öldynamisches Übertragungssystem, in dem das Ende der Antriebswelle mit einem Mechanismus versehen ist, der die Translation eines Kolbens verursacht; daraus entsteht eine Druckerhöhung in einer Kammer, die ein Fluid enthält. Sobald die Kammer einen bestimmten Druck erreicht, wird der Zufluß des Fluids aufgehalten, so daß der Hub des Kolbens blockiert wird. Der mit der Antriebswelle einteilige Kolben nimmt bei seiner Umdrehungsbewegung den hinteren Deckel und die an ihm befestigte Vorgelegewelle mit.

2) Öldynamisches Übertragungssystem wie bei Anspruch 1, in dem die Hochdruckkammer durch ein oder mehrere Rückschlagventile mit veränderlichem Schnitt mit der Niederdruckkammer verbunden wird. Solche Rückschlagventile werden durch einen Mechanismus geöffnet oder geschlossen, so daß sich der Druck innerhalb der Hochdruckkammer erniedrigt; der Kolben kann deswegen seinen Hub zum Teil von neuem beginnen und die Übersetzung zwischen Antriebs- und Vorgelegewelle reduziert sich demzufolge.

3) Öldynamisches Übertragüngssystem wie bei Anspruch 1,2, in dem sich das Volumen der Niederdruckkammer wegen einer Expansionswand erhöht oder erniedrigt. Diese Expansionswand gleicht die Volumenänderungen des Öls aus während des Ablaufs des Systems: solche Änderungen werden von der Temperaturerhöhung und vom veränderlichen Druck der Hochdruckkammer verursacht.

4) Öldynamisches Übertragungssystem wie bei Anspruch 1,2,3, in dem das Öffnen oder Schließen der Rückschlagventile mit veränderlichem Schnitt von außen durch eine manuelle oder automatische Vorrichtung geregelt wird.

Europäisches
Patentamt

**EUROPÄISCHER RECHERCHENBERICHT**

Nummer der Anmeldung

EP    91 11 2465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-4 001 070 (FUJI TEKKO CO. LTD.)<br>* Spalte 2, Zeile 34 - Zeile 54 *<br>* Spalte 5, Zeile 30 - Spalte 7, Zeile 12 *<br>* Abbildungen 2,3 * | 1 | F16D31/02 |
| A | | 2,4 | |
| A | FR-A-940 503 (JACQUET FELICIEN)<br>* Seite 2, rechte Spalte, Zeile 61 - Zeile 78 *<br>* Abbildungen 3,4 *<br>--- | 1,2 | |
| A | FR-A-1 290 077 (CONSTRUCTIONS INDUSTRIELLES ELECTRO-MECANIQUES SA)<br>* Seite 1, rechte Spalte, Zeile 7 - Zeile 22 *<br>* Abbildungen 1,2 * | 1,3 | |

**RECHERCHIERTE SACHGEBIETE (Int. Cl.5 )**

F16D

Der vorliegende Recherchenbericht wurde für alle Patentansprüche erstellt

| Recherchenort | Abschlußdatum der Recherche | Prüfer |
|---|---|---|
| DEN HAAG | 31 OKTOBER 1991 | VAN PROOIJEN T. |

EPO FORM 1503 03.82 (P0403)